# EUROPEAN PATENT SPECIFICATION

(11) **EP 1 099 419 B1**
(45) Date of publication and mention of the grant of the patent: **24.05.2006**
(21) Application number: 00114657.0
(22) Date of filing: 07.07.2000
(51) Int. Cl.: A61C 13/235

(54) **Keeper for dental magnetic attachment**
Magnetanker für zahnärztliche magnetische Halterung
Armature d'aimant pour fixation dentaire magnétique

(30) Priority: 12.11.1999 JP 32238899
(43) Date of publication of application: 16.05.2001
(73) Proprietor: Aichi Steel Corporation, Tokai-shi, Aichi-Ken 476-8666 (JP)
(72) Inventor: Honkura, Yoshinobu, Chita-gun, Aichi-ken (JP); Arai, Kazuo, Tokai-shi, Aichi-ken (JP); Tanaka, Hiroyuki, Chita-shi, Aichi-ken (JP); Kimura, Kazunari, Chita-shi, Aichi-ken (JP); Mizutani, Hiroshi, Hino-shi, Tokyo-to (JP); Hiranuma, Kenji, Nagoya-shi, Aichi-ken (JP); Takakura, Hisao, c/o Inoue Attachment Corp. Ltd., Tokyo-to (JP)
(74) Representative: Kramer - Barske - Schmidtchen

(56) References cited:
- EP-A- 0 347 510
- US-A- 4 824 371

## Description

The present invention relates to a keeper for dental magnetic attachments so as to fix to a denture base by magnetic attraction, and methods for removing the body of the keeper from a tooth root.

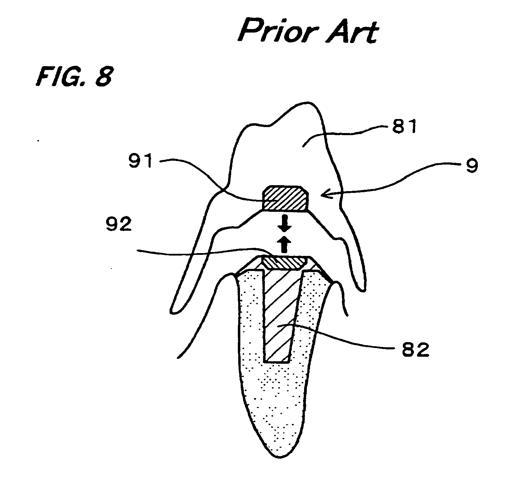

Dental magnetic attachment to fix denture by magnetic attraction is being developed in the dental field. A known dental magnetic attachment 9 is as shown in FIG. 8. It is composed of a magnetic assembly 91 and a keeper 92 embedded in a root cap 82 to be attracted by said magnetic assembly 91. Magnetic attractive force is generated between said keeper 92 and said magnetic assembly 91.

Dental magnetic attachment having the structure mentioned above needs the condition that keeper 92 is incorporated into the root cap 82 by casting method.

This process in which the keeper 92 is incorporated into the root cap 82 requires precise control of casting conditions at an elevated temperature to maintain the good quality of the keeper 92. This casting process requires a lot of time and is apt to cause various troubles. As a result the cost of keeper preparation is increased significantly. It also prolongs the period for medical treatment to the patients.

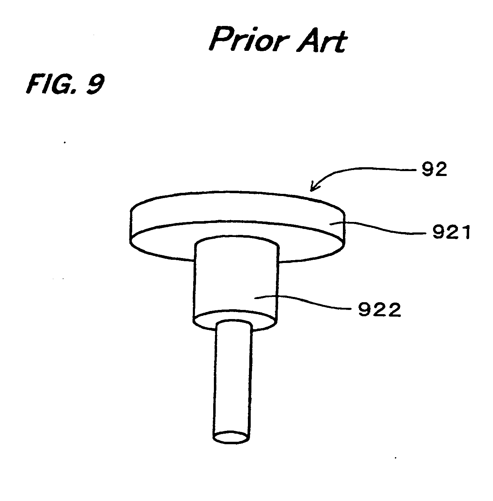

Therefore, these days the keeper is cemented directly on the root surface with the application of advanced dental resin. In this case, a keeper 92, consisting of a body of keeper 921 and a post 922, is fabricated by machining, as shown in FIG. 9 and

### FIG. 10.

However the keeper 92 mentioned above faces the following difficulties.

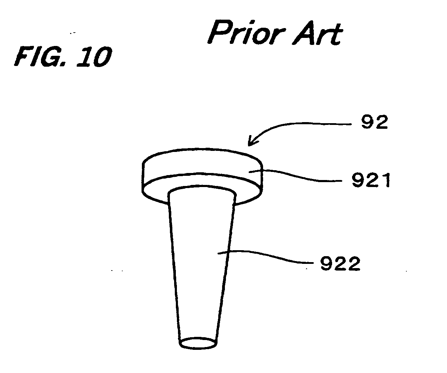

First, as seen in FIG. 9 and FIG. 10, said post 922 has a rather large diameter because of the limitation of machining capability. The thick post requires the tooth canal to be enlarged, which makes the root fragile. Furthermore, the shape of said post 922 provides no resistance against the post from coming out of the root canal.

Second, if root surface is inclined with respect to root canal, while the root cap in which a keeper is incorporated by casting can be fitted to the inclination, a keeper with a post 922 made by machining can not be adjusted to the inclination.

Third, said keeper 92 takes much time to remove in case of diagnosing by MRI (magnetic resonance imaging).

The active keeper 92 is made of soft magnetic materials, and the material causes undesirable influence on MRI image. In the case that patients should get MRI diagnosis, both said body 921 and post 922 should be removed from the tooth root to avoid bad influence on MRI image. The removing of them takes a lot of time and labor.

EP No. 347510 discloses a keeper according to the preamble of claim 1.

Considering these difficulties, the present invention offers a keeper for dental magnetic attachment which is superior in fitting to the tooth root shape, as well as easier to be removed from tooth root when necessary.

One of the most notable points of the keeper of claim 1 is that each part, namely the body of the keeper and the post jointed to said body, has a different material, the body being soft magnetic material and the post being non-magnetic material, and that said post has said bendable part.

In following section the effects of the present invention are described.

Because the keeper has a post on the bottom, it can be fixed directly in the root canal with dental resin, without fabricating a costly cast root cap in which the keeper would be incorporated. In this invented keeper, said body of the keeper is jointed together with said post. Therefore it can be fixed directly on a tooth root without using a root cap, but with the dental resin. It reduces the cost and simplifies the manufacturing process by omitting the aforementioned casting process.

The post has said bendable part so that the angle of the post against the body of the keeper can be adjusted to be desired degree. For example, in the case that the root surface is inclined against the axis of the root, said post can be adjusted to the angle of the root axis by bending said bendable part. Therefore, the present keeper has high adaptability to the variety of root surface conditions.

Said body of the keeper is made of a different material from that of the post which is made of non-magnetic material. So in the case of MRI diagnosis after embedding this keeper in the tooth root, only the body of the keeper should be removed before MRI diagnosis. It makes the preparation for MRI diagnosis easier and requires less time than the keepers of Figs. 9 and 10, both of which is are entirely made of soft magnetic material.

Therefore, the present invention offers the keeper for dental magnetic attachment that is adjustable to various shapes of the tooth root and relatively easy to remove.

In addition, the bendable part is just under the bottom of the body of the keeper and has a smaller diameter than the other parts of the post. Smaller diameter makes bending stiffness moderately lower and makes bending easy. Also smaller diameter of the bendable part makes the step at the end of the part of the bigger diameter. This step improves the anchor effect and strengthens the stability of the keeper against detachment.

As set forth in claim in 2, it is preferable that the diameter of said bendable part should be within a range of 0.2 - 0.8mm. In case the diameter of bendable part is less than 0.2 mm, the stiffness becomes too low. On the other hand, in case the diameter is more than 0.8 mm, bending stiffness becomes too high to bend.

A method to remove said keeper after it is fixed in the tooth root with dental resin is provided, wherein, said body of the keeper is removed by cutting said part off from the post together with said dental resin around said body of the keeper.

One of the most notable points of such method is that in case of removing the keeper, One of the most notable points of is that in case of removing the keeper, said body of the keeper made of soft magnetic material is separated from the post made of non-magnetic material and that only the body of the keeper is removed.

In this case, time of the work is greatly reduced. So in case MRI diagnosis is needed without delay, this measure is capable to cope with it.

In addition, it is preferable to cut off the body at the bendable part. The bendable part not only has lower bending stiffness than any other part, but also the part is easy to cut, so the work of cutting the post become much easier.
FIG. 1 is a perspective view of the first embodiment of a keeper;
FIG. 2 is an illustration of the first embodiment of an installation of the keeper;
FIG. 3 is an illustration of the first embodiment of another installation of the keeper;
FIG. 4 is an illustration of a second embodiments for removing the keeper;
FIG. 5 is an illustration of the second embodiment of the view from above of the cutting position for removing the keeper;
FIG. 6 is an illustration of the second embodiment of the view from a vertical face of the cutting position for removing the keeper;
FIG. 7 is an illustration of a method for removing a known keeper as a comparative sample;
FIG. 8 is an illustration of the structure of the dental magnetic attachment of the prior art;
FIG. 9 is a perspective view of a keeper of the prior art;
FIG. 10 is a perspective view of another keeper of the prior art.

### EXAMPLE 1

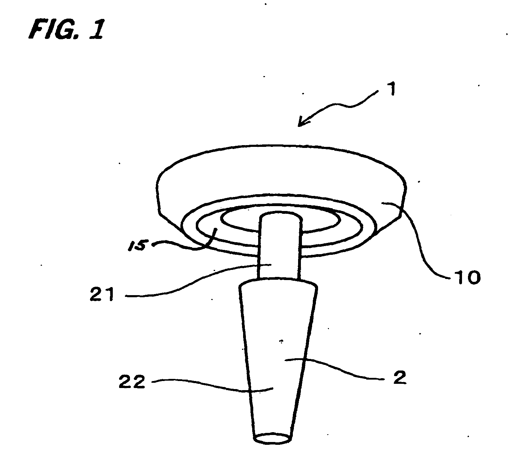

The embodiments of the keeper for dental magnetic attachment according to the present invention will be described with reference to FIG. 1 to FIG. 7.

The known keeper 1 shown in FIG. 8 is attracted by the magnetic assembly 91 embedded in denture 81.

The keeper 1, as shown in FIG. 1, comprises a body of the keeper 10 made of soft magnetic material and a post 2 made of non-magnetic material jointed on the bottom of the said body of keeper 10. The post 2 has a bendable part 21 for bending process.

The specification is described as follows.

As shown in FIG. 1, the present body of the keeper 10 is made of magnetic material, Fe-19Cr-2Mo-0.2Ti soft magnetic steel, in a shape of a disk.

The lateral face of the keeper body 10 is tapered so that the diameter of the top face of the body 10 is larger than that of the bottom face. As a specific dimension, top diameter is 3.6 mm and the thickness is about 0.7 mm. The bottom side of the body 10 of the keeper has a hollow 15 in the center. The post 2 is jointed at the center of this hollow 15.

The post 2 is made of non-magnetic material, SUS316 non-magnetic stainless steel specified in Japanese Industrial Standards. The post 2 has a bendable part 21 which has a smaller diameter at the connection side with the body 10 of the keeper and taper 22 which is like a cone with the cut tip at the opposite side. As a specific dimension, the length of the post 2 is 7.0 mm, the top diameter of the bendable part is 0.5 mm, the largest diameter of taper 22 is 1.2 mm, and the tip diameter is 0.5 mm.

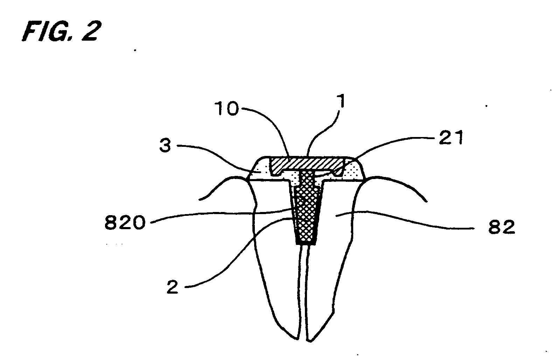

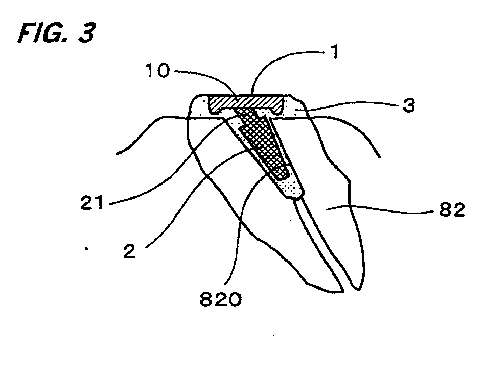

FIG. 2 and FIG. 3 describe how to set the keeper 1 in a tooth root 82.

The cross section shown in FIG. 2 is the first example, wherein the tooth root 82 is almost vertical and the keeper 1 is embedded in the enlarged root canal 820. In the case shown in FIG. 2, the keeper 1 is used as it is, in the condition that the body of the keeper 10 is vertical to the post 2 without bending. Inserting the post 2 into the root canal 820 of the tooth root 82, the keeper 1 is firmly embedded in the tooth root 82 with the dental resin 3 around the post 2 and the body of the keeper10.

The cross section shown in FIG. 3 is the second example, wherein tooth root 82 is inclined and the keeper 1 is embedded in the inclined root canal 820. In this case, by bending the post 2, the post 2 is transfonned into the inclined condition to the body of the keeper10. After that, like the first example, by inserting the post 2 into the root canal 820 of the tooth root 82, the keeper 1 is firmly embedded in the tooth root 82 with the dental resin 3 around the post 2 and the body of the keeper 10. Therefore, even if the tooth root 82 is inclined, the body of the keeper 10 is easily embedded in the horizontal condition.

As mentioned above, in the present keeper, the body of the keeper 10 is jointed together with the post 2 so as to embed the keeper 1 directly into the tooth root 82 with dental resin 3 without utilizing a root cap. Therefore it enables to omit the costly casting process, and the treatment to the patient can be completed within a day.

In addition, the post 2 has said bendable part 21. Therefore, the angle of the post 2 to the body 10 of the keeper can be adjusted easily according to the condition. For example as shown in FIG. 3, in case that tooth root 82 is inclined and the root canal 820 is also inclined, the post 2 can fit to the angle of the root canal 820 by bending the bendable part 21. Therefore, the present invented keeper has a high adaptability to the inclination of the tooth root 82.

In addition, the body of the keeper 10 and the post 2 are made of a different materials. The post 2 is made of non-magnetic material. Therefore it enables the work to remove the keeper 1 relatively easy as given in the details below.

### EXAMPLE 2

This example describes a method to remove the keeper 1, after the keeper 1 is embedded in the tooth root 82 with the dental resin 3.

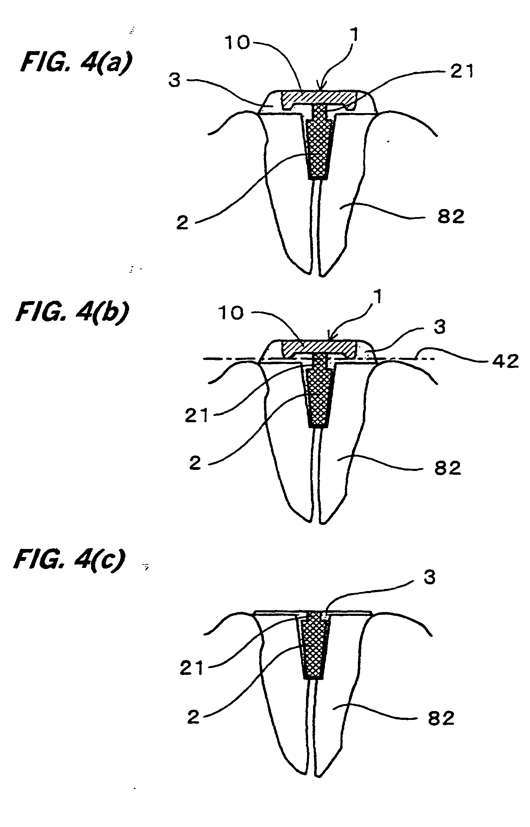

As shown in FIG. 4 (b), by cutting the post 2 together with the dental resin 3 around the body of the keeper 10, the body of the keeper 10 is separated and taken off.

The details will be described as follows.

As shown in FIGS. 2 and 4 (a), in the condition that the keeper 1 is embedded in tooth root 82, dental resin 3 is filled between the post 2 and the canal 820 the tooth root 82, and around the body of the keeper 10 on the surface of the tooth root 82. In the case of MRI (magnetic resonance imaging) diagnosis in this condition, the soft magnetic material of the body of the keeper 10 gives undesirable influence and disturbs the accurate MRI diagnosis. Therefore removing this soft magnetic material is needed.

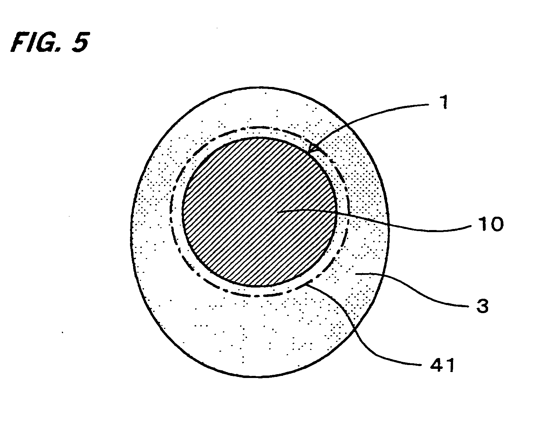

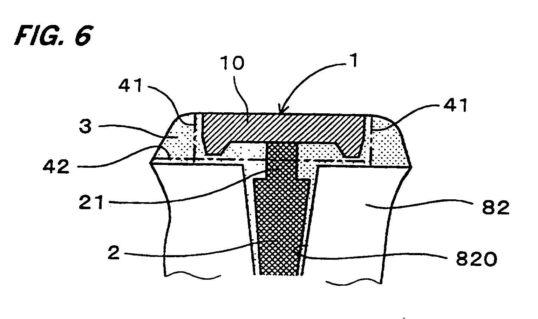

In this example, as shown in FIG. 4 (b), horizontal cut 42 is given to the part slightly under the bottom of the body of the keeper 10. In FIGS. 5 and 6, the vertical cut 41 can be given first around the body of keeper 10. In this case too, a horizontal cut is given. Then the bendable part 21 of the post 2 is cut off with dental resin 3. In this way, the body of the keeper 10 made of soft magnetic material can be taken off relatively easily.

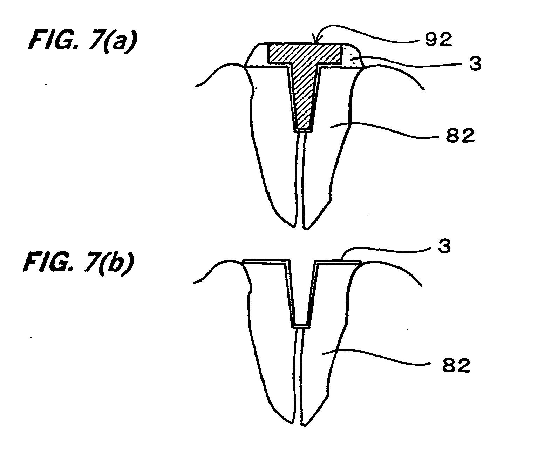

To compare with this method, the prior method for removing the keeper 92 with the post, both of which are made of soft magnetic material as shown in FIG. 7 (a), is shown.

In the case shown in FIG. 7 (b), not only the horizontal cut, but also a vertical hole is necessary to remove the post.

This comparison shows the advantage of the invention. Because the keeper 1 of this invention has soft magnetic material only in the body 10 of the keeper and the post 2 is made of non-magnetic material, only the body of the keeper 10 needs to be removed before MRI diagnosis. Therefore in case of emergent MRI diagnosis, as mentioned above, the easiness can make the preparing time shorter than the prior one utilizing the prior keeper.

In addition, because the bendable part 21 is cut which is the thinnest part of the post 2, the cutting can be done easily.

As mentioned above, with this invention, we can offer the keeper for the dental magnetic attachment that has high adaptability to the inclination of the tooth root and that is relatively easy to remove.
1 is a keeper for a dental magnetic attachment,
10 is the body of the keeper,
2 is a post,
21 is a bendable part,
22 is taper.

## Claims

1. A keeper (1) adapted to be attracted by a dental magnetic attachment (91) embedded in a denture base (81), comprising:
a keeper body (10) made of magnetic material, and
a post (2) made of non-magnetic material, the post being joined together with said keeper body at the bottom of said keeper body,
**characterized in that**:
the keeper body (10) is made of a soft magnetic material, and
the post (2) has a bendable part (21) set just under the bottom of said keeper body and a taper (22) connected to the bendable part, wherein at the connection, the taper has a diameter larger than the diameter of the bendable part.

2. A keeper (1) for dental magnetic attachment as set forth in claim 1, wherein said bendable part (21) has a diameter that is smaller than or equal to any other part of the taper (22).

3. A keeper (1) for dental magnetic attachment as set forth in claim 2, wherein the diameter of the bendable part (21) is 0.2 - 0.8mm.

4. A keeper (1) for dental magnetic attachment as set forth in claim 1, 2 or 3, wherein the keeper body (10) is made of Fe- 19Cr-2Mo-0.2Ti.

5. A keeper (1) for dental magnetic attachment as set forth in any preceding claim, wherein the taper (22) has a cone-shape with a cut tip at the opposite side of the bendable part (21).

## Patentansprüche

1. Halter (1), der dazu angepasst ist, durch eine dentalmagnetische Befestigung (91), die in einer Basis (81) eines künstlichen Gebisses eingebettet ist, angezogen zu werden, enthaltend:
einen Halterkörper (10), der aus magnetischem Material gebildet ist, und
eine Säule (2), die aus nicht magnetischem Material gebildet ist, wobei die Säule mit dem Halterkörper am Boden des Halterkörpers zusammengefügt ist,
**dadurch gekennzeichnet, dass**:
der Halterkörper (10) aus einem weichmagnetischen Material gebildet ist, und
die Säule (2) einen biegbaren Teil (21) aufweist, der unmittelbar unter dem Boden des Halterkörpers festgelegt ist und einen Konus (22) aufweist, der mit dem biegbaren Teil verbunden ist, wobei an der Verbindungsstelle der Konus einen größeren Durchmesser als den Durchmesser des biegbaren Teils aufweist.

2. Halter (1) für eine dentalmagnetische Befestigung nach Anspruch 1, wobei der biegbare Teil (21) einen Durchmesser aufweist, der kleiner oder gleich jedem anderen Teil des Konus (22) ist.

3. Halter (1) für eine dentalmagnetische Befestigung nach Anspruch 2, wobei der Durchmesser des biegbaren Teils (21) 0,2 - 0,8 mm beträgt.

4. Halter (1) für eine dentalmagnetische Befestigung nach Anspruch 1, 2 oder 3, wobei der Halterkörper (10) aus Fe-19Cr-2Mo-0,2Ti gebildet ist.

5. Halter (1) für eine dentalmagnetische Befestigung nach einem der vorhergehenden Ansprüche, wobei der Konus (22) eine Konusform mit einer abgeschnittenen Spitze auf der gegenüberliegenden Seite zum biegbaren Teil (21) aufweist.

## Revendications

1. Armature (1) adaptée à être attirée par un élément d'attache magnétique dentaire (91) noyé dans une base de denture (81), comprenant :
un corps d'armature (10) réalisé en matériau magnétique, et
une tige (2) réalisée en matériau non magnétique, la tige étant jointe audit corps d'armature à la partie inférieure dudit corps d'armature,
**caractérisée en ce que** :
le corps d'armature (10) est réalisé en matériau magnétique doux, et
la tige (2) comprend une partie flexible (21) située juste au dessous de la partie inférieure dudit corps d'armature, et une partie effilée (22) connectée à la partie flexible, telles que, au niveau de la connexion, la partie effilée a un diamètre supérieur au diamètre de la partie flexible.

2. Armature (1) pour élément d'attache magnétique dentaire selon la revendication 1, dans laquelle ladite partie flexible (21) a un diamètre qui est inférieur ou égal à une quelconque autre partie de la partie effilée (22).

3. Armature (1) pour élément d'attache magnétique dentaire selon la revendication 2, dans laquelle le diamètre de la partie flexible (21) est de 0,2 à 0,8 mm.

4. Armature (1) pour élément d'attache magnétique dentaire selon les revendications 1, 2 ou 3, dans laquelle le corps d'armature (10) est produit en Fe-19Cr-2Mo-0,2Ti.

5. Armature (1) pour élément d'attache magnétique dentaire selon l'une quelconque des revendications précédentes, dans laquelle la partie effilée (22) a une forme conique avec un embout découpé du côté opposé de la partie flexible (21).
